# EUROPÄISCHE PATENTSCHRIFT

(11) **EP 1 553 289 B1**
(45) Veröffentlichungstag und Bekanntmachung des Hinweises auf die Patenterteilung: **14.03.2007**
(21) Anmeldenummer: 04100009.2
(22) Anmeldetag: 06.01.2004
(51) Int. Cl.: F02N 11/08

(54) **Vorrichtung und Verfahren zum automatischen Abstellen und erneuten Starten eines Brennkraftmotors in einem Fahrzeug**
A stop-start device for controlling the operation of an internal combustion engine of a vehicle
Dispositif et méthode de d'arrêt-démarrage pour commander l'opération d'un moteur à combustion interne d'un véhicule

(43) Veröffentlichungstag der Anmeldung: 13.07.2005
(73) Patentinhaber: Ford Global Technologies, LLC, A subsidary of Ford Motor Company, Dearborn, MI 48126 (US)
(72) Erfinder: Grieser, Klemens, 40764, Langenfeld (DE); Phlips, Patrick Joseph, 50858, Koeln (DE)
(74) Vertreter: Drömer, Hans-Carsten

(56) Entgegenhaltungen:
- DE-A- 3 226 331
- DE-A- 10 023 331
- DE-A- 10 238 315
- DE-A- 10 256 993
- DE-A- 19 532 135
- DE-C- 4 412 438
- DE-C- 4 421 512
- DE-C- 10 211 462

## Beschreibung

Die Erfindung betrifft ein Verfahren zur Steuerung des automatischen Abstellens einer Brennkraftmaschine in einem Kraftfahrzeug mit einer vom Fahrer zu betätigenden Kupplung. Ferner betrifft sie ein Antriebssystem für ein Kraftfahrzeug, enthaltend eine Brennkraftmaschine, eine Kupplung und ein Motorsteuerungssystem.

Zur Verringerung von Kraftstoffemissionen und zur Minimierung des Kraftstoffverbrauchs in einem Kraftfahrzeug ist es bekannt, im Rahmen einer Abstellautomatik die Brennkraftmaschine während längerer Stillstandszeiten automatisch abzustellen und vor einem erneuten Anfahren des Kraftfahrzeuges neu zu starten. Diesbezüglich beschreibt die US 6 504 259 B1 ein hybrides Kraftfahrzeug mit einer Brennkraftmaschine und einem Elektromotor, bei dem das automatische Abstellen der Brennkraftmaschine unter anderem als Voraussetzung hat, dass die Kupplung des Kraftfahrzeuges betätigt wird. Ferner wird auch das Neustarten der Brennkraftmaschine unter anderem von einem Betätigen der Kupplung ausgelöst.

Aus der gattungsgemäßen Patentschrift DE 44 12 438 C1 ist ein Verfahren zum automatischen Abstellen und Anlassen eines Verbrennungsmotors bekannt, bei welchem der laufende Motor abgestellt wird, wenn über die Dauer einer vorgegebenen Verweilzeit bestimmte Motorstopp-Bedingungen erfüllt sind, wozu insbesondere gehört, dass die Fahrgeschwindigkeit Null oder kleiner als eine vorgebbare Grenzgeschwindigkeit ist, und dass die Kupplung nicht betätigt ist.

Aus DE 195 32 135 A1 ist ein Antriebssystem für ein Kraftfahrzeug mit einer automatischen Start-Stopp-Steuerung des Antriebsaggregats bekannt, bei welchem ein automatisches Stoppen des Antriebsaggregats veranlasst wird, wenn eine von mehreren Stoppbedingungen erfüllt ist, wozu insbesondere eine Bremsbetätigung oder das Erreichen einer bestimmten Kühlmitteltemperatur oder anderer Betriebsgrößen gehören können.

Es ist Aufgabe der vorliegenden Erfindung, ein alternatives Verfahren zur Steuerung des automatischen Abstellens einer Brennkraftmaschine bereitzustellen, welches einfach und robust ist und darüber hinaus für den Fahrer ein transparentes Verhalten zeigt.

Diese Aufgabe wird durch ein Verfahren mit den Merkmalen des Anspruchs 1 sowie durch ein Antriebssystem mit den Merkmalen des Anspruchs 7 gelöst. Vorteilhafte Ausgestaltungen sind in den Unteransprüchen enthalten.

Das erfindungsgemäße Verfahren dient der Steuerung des automatischen Abstellens einer Brennkraftmaschine in einem Kraftfahrzeug, welches eine vom Fahrer zu betätigende Kupplung enthält. Die Kupplung dient dabei in üblicher Weise der willkürlichen Unterbrechung der Kraftübertragung von der Brennkraftmaschine zu den Rädern. Typischerweise folgt im Kraftübertragungsweg auf die Kupplung ein automatisches oder manuelles Getriebe. Die Brennkraftmaschine wird abgestellt, wenn für eine vorgegebene Zeitdauer die folgenden Voraussetzungen durchgehend erfüllt sind:
- Die Fahrzeuggeschwindigkeit liegt unterhalb eines vorgegebenen Schwellwertes, z. B. unterhalb von ca. 3 km/h.
- Die Kupplung des Kraftfahrzeuges ist geschlossen, d.h., daß sie eine Eingangsrotation von der Brennkraftmaschine an nachfolgende Abschnitte der Kraftübertragung weiterleitet.
- Die Abstellautomatik der Brennkraftmaschine (2) ist aktiviert.
- Optional sind darüber hinaus einzuhaltende Stop-Zusatzvoraussetzungen erfüllt. Beispiele hierfür werden in Verbindung mit speziellen Ausgestaltungen der Erfindung beschrieben. Im Prinzip kann es für das Verfahren jedoch ausreichend sein, wenn die vorstehend genannten zwei Bedingungen hinsichtlich der Fahrzeuggeschwindigkeit und der Kupplungsbetätigung erfüllt sind.

Das Verfahren ist dadurch gekennzeichnet, daß die Abstellautomatik der Brennkraftmaschine alternierend deaktiviert und aktiviert wird, wenn die Kupplung innerhalb der genannten vorgegebenen Zeitdauer einmal geöffnet und erneut geschlossen wird.

Bei dem beschriebenen Verfahren wird die Brennkraftmaschine abgestellt, wenn das Fahrzeug langsam fährt oder nahezu steht und dabei die Kupplung geschlossen ist. Die gleichzeitige Erfüllung dieser beiden Bedingungen über einen vorgegebenen Zeitraum hinweg bedingt zwangsläufig, daß trotz geschlossener Kupplung keine Kraftübertragung von der Brennkraftmaschine zu den Antriebsrädern erfolgt, d. h., daß sich z. B. ein Getriebe im Kraftübertragungsweg in Neutralstellung befinden muß. Dieser auf einen längeren Stillstand des Fahrzeuges hinweisende Zustand wird somit detektiert, ohne daß hierfür ein eigener Zustandssensor im Getriebe vorgesehen werden müßte. Das Verfahren erlaubt daher eine entsprechend einfachere Auslegung des Antriebssystems. Darüber hinaus hat es den Vorteil, daß es für den Fahrer ein sehr transparentes Verhalten zeigt, da ein Schließen der Kupplung bei laufendem Motor eine typische Situation vor bzw. während eines längeren Stillstands eines Kraftfahrzeuges ist. Eine weitere Voraussetzung für das Abstellen der Brennkraftmaschine grundsätzliche Aktivierung der Abstellautomatik, d. h. eines automatischen Abstellens der Brennkraftmaschine. Die Abstellautomatik kann z.B. vom Fahrer willkürlich außer Kraft gesetzt werden, um besonderen Verkehrssituationen wie etwa einem Stop-and-go-Verkehr gerecht zu werden, oder es kann immer nach einem automatischen Abstellen mit daran anschließendem Neustart der Brennkraftmaschine eine Deaktivierung der Abstellautomatik für eine bestimmte Zeitdauer erfolgen.

Die Abstellautomatik kann somit komplett aktiviert oder deaktiviert werden. Dabei erfolgt dabei eine Deaktivierung der Abstellautomatik dann, wenn während der oben genannten vorgegebenen Zeitdauer, für welche die Fahrzeuggeschwindigkeit unter einem Schwellwert liegt und die Kupplung geschlossen sein muß, die Kupplung noch einmal geöffnet und erneut geschlossen wird. D. h., daß der Fahrer durch ein kurzzeitiges Betätigen der Kupplung die Abstellautomatik bewußt deaktivieren kann. Dies hat den Vorteil, daß für die Kontrolle der Aktivität der Abstellautomatik keine zusätzlichen Bedienelemente erforderlich sind. Die erneute Aktivierung der Abstellautomatik erfolgt in gleicher Weise durch ein Öffnen und Schließen der Kupplung während der vorgegebenen Zeitdauer, in welcher die Fahrzeuggeschwindigkeit unter einem Schwellwert liegt.

Die optionalen Stop-Zusatzvoraussetzungen, welche für ein automatisches Abstellen der Brennkraftmaschine gegebenenfalls erfüllt sein müssen, können unter anderem die folgenden Bedingungen umfassen:
- Das Betätigen der (Hand- oder Fuß-)Bremse des Kraftfahrzeuges. Ein solches aktives Bremsen durch den Fahrer zeigt zusätzlich an, daß ein Stillstand des Fahrzeuges vorliegt bzw. erwünscht ist.
- Einen warmgelaufenen Zustand der Brennkraftmaschine, da dies ein schnelles Neustarten gewährleistet.
- Einen geschlossenen Zustand aller Fahrzeugtüren, da das Öffnen einer Tür auf einen Anhaltevorgang hinweist, bei welchem der Motorbetrieb vom Fahrer kontrolliert werden soll.
- Ein ausreichendes Vorhandensein von elektrischer Energie für die Versorgung elektrischer Verbraucher an Bord des Kraftfahrzeuges, wobei die genannte Energie typischerweise in einer Batterie zwischengespeichert ist. Die Beurteilung des Kriteriums kann insbesondere den aktuellen und gegebenenfalls auch den vorhergesagten Verbrauch an elektrischer Energie beinhalten.

Gemäß einer Weiterbildung des Verfahrens in Verbindung mit einem Kraftfahrzeug, das eine elektrische Parkbremse enthält, wird die genannte Parkbremse vor dem Abstellen der Brennkraftmaschine eingelegt. Auf diese Weise wird die Sicherheit und Zuverlässigkeit des Verfahrens erhöht, da die Parkbremse ein ungewolltes Wegrollen des Fahrzeuges während des Motorstillstands verhindert.

Wie oben erläutert wurde, kann eine mögliche Stop-Zusatzvoraussetzung für das Abstellen der Brennkraftmaschine eine Betätigung der Bremse des Kraftfahrzeuges durch den Fahrer sein. In diesem Falle wird nach dem Abstellen der Brennkraftmaschine vorzugsweise ein (z. B. optisches oder akustisches) Warnsignal an den Fahrer abgegeben, falls die Bremse des Kraftfahrzeuges losgelassen wird. Der Fahrer wird somit darauf hingewiesen, daß möglicherweise eine kritische Situation vorliegt, da das Fahrzeug nicht mehr durch die Bremsen gehalten wird. Ein automatischer Neustart der Brennkraftmaschine soll dagegen durch das Loslassen der Bremse nicht ausgelöst werden.

Weiterhin kann nach dem Abschalten der Brennkraftmaschine eine Aufforderung zum Neustart der Brennkraftmaschine an den Fahrer abgegeben werden, falls die vorrätige elektrische Energie nicht mehr zum ordnungsgemäßen Betrieb der elektrischen Verbraucher des Kraftfahrzeuges ausreicht. Die aktuellen Leistungsanforderungen der elektrischen Verbraucher einerseits und die vorhandene gespeicherte elektrische Energie andererseits werden somit ständig beobachtet, um eine drohende Unterversorgung der Verbraucher frühzeitig zu erkennen. In diesem Falle muß Energie durch die Brennkraftmaschine nachgeliefert werden, weshalb die genannte Aufforderung an den Fahrer abgegeben wird. Ein automatischer Neustart der Brennkraftmaschine soll dagegen nicht erfolgen. Für den Fahrer bleibt auf diese Weise das automatische Abstell- und Neustartverhalten äußerst transparent. Ferner werden Gefahrensituationen vermieden, die sich durch ein Einlegen eines Ganges bei abgestellter Brennkraftmaschine und einen automatischen Neustart der Brennkraftmaschine bei geschlossener Kupplung ergeben könnten.

Ein Neustart der Brennkraftmaschine nach einem automatischen Abstellen kann im Prinzip durch alle hierfür geeigneten Kriterien ausgelöst werden. Insbesondere kann die Brennkraftmaschine wieder gestartet werden, wenn die Kupplung geöffnet wird und gegebenenfalls vorgegebene Start-Zusatzvoraussetzungen erfüllt sind. Ein erstmaliges Öffnen bzw. Betätigen der Kupplung nach einem längeren Stillstand des Fahrzeugs ist ein typischer Hinweis darauf, daß der Fahrer Vorbereitungen für ein erneutes Anfahren (z. B. das Einlegen eines Ganges) trifft, so daß ein Neustart der Brennkraftmaschine angezeigt ist. Das Starten der Brennkraftmaschine bei geöffneter Kupplung ist darüber hinaus gefahrlos möglich, da der Kraftübertragungsweg zu den Rädern in diesem Falle unterbrochen ist. Zu den optional zu erfüllenden Start-Zusatzvoraussetzungen kann beispielsweise der geschlossene Zustand aller Türen des Kraftfahrzeuges gehören.

Die Erfindung betrifft ferner ein Antriebssystem für ein Kraftfahrzeug, welches eine Brennkraftmaschine, eine Kupplung im Kraftübertragungsweg und ein Motorsteuerungssystem enthält. Das Motorsteuerungssystem ist dabei dazu eingerichtet, ein Verfahren der oben erläuterten Art auszuführen. D.h., daß es die Brennkraftmaschine abstellt, falls für eine vorgegebene Zeitdauer die Fahrzeuggeschwindigkeit unterhalb eines vorgegebenen Schwellwertes liegt und die Kupplung geschlossen ist und falls gegebenenfalls darüber hinaus einzuhaltende Stop-Zusatzvoraussetzungen erfüllt sind. Hinsichtlich der Einzelheiten und möglichen Weiterbildungen des Antriebssystems wird im Übrigen auf die obige Beschreibung des Verfahrens verwiesen.

Das Antriebssystem kann insbesondere einen mit dem Motorsteuerungssystem gekoppelten Sensor zur Erfassung eines vollständigen Schließens der Kupplung enthalten. Über einen derartigen verhältnismäßig einfachen Sensor kann zuverlässig die Bedingung überprüft werden, daß die Kupplung nicht betätigt wird bzw. daß sie vollständig geschlossen ist. Aufwändige Sensoren zur Feststellung des Schaltzustandes eines Getriebes sind dagegen bei dem vorgeschlagenen Antriebssystem nicht erforderlich.

Des Weiteren kann das Antriebssystem eine elektrische Parkbremse enthalten. Diese wird vorzugsweise von der Motorsteuerung aktiviert kurz bevor die Brennkraftmaschine automatisch abgestellt wird. Bei einem erneuten Losfahren des Kraftfahrzeuges wird die Parkbremse von der Motorsteuerung wieder gelöst.

Im Folgenden wird die Erfindung mit Hilfe der Figuren beispielhaft näher erläutert.
Es zeigen:
- Fig. 1: schematisch die Komponenten eines erfindungsgemäßen Antriebssystems für ein Kraftfahrzeug, und
- Fig. 2: ein Ablaufdiagramm mit den wesentlichen Schritten des erfindungsgemäßen Verfahrens.

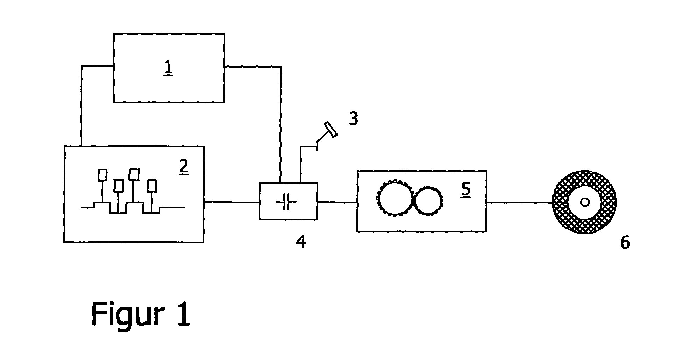

In Figur 1 sind schematisch die für die vorliegende Erfindung wesentlichen Komponenten des Antriebssystems eines Kraftfahrzeuges dargestellt. Als Kraftquelle für das Antriebssystem dient eine Brennkraftmaschine 2, bei der es sich z. B. um einen Ottomotor oder einen Dieselmotor handeln kann. Die Kurbelwelle der Brennkraftmaschine 2 ist über eine Kupplung 4 mit einem manuellen oder automatischen Getriebe 5 verbindbar. Die Ausgangswelle des Getriebes 5 führt zu Antriebsrädern 6.

Für das Öffnen und Schließen der Kupplung 4 durch einen Fahrer ist ein Kupplungspedal 3 vorgesehen. Weiterhin umfaßt das Antriebssystem eine Motorsteuerung 1, die z. B. durch einen elektronischen Regler (Mikroprozessor etc.) realisiert sein kann und die sowohl mit der Brennkraftmaschine 2 als auch der Kupplung 4 und/oder dem Kupplungspedal 3 gekoppelt ist. Die Motorsteuerung 1 kann von der Brennkraftmaschine 2 Daten über den Betriebszustand des Kraftfahrzeuges, insbesondere über die Fahrzeuggeschwindigkeit v erhalten. Ferner kann sie die Brennkraftmaschine 2 steuern und insbesondere automatisch abstellen. Das Abstellen wird z. B. durch eine Unterbrechung der Kraftstoffzufuhr und/oder durch eine Unterdrückung der Zündung erreicht. Von einem am Kupplungssystem 3, 4 angeordneten Sensor (nicht dargestellt) erhält die Motorsteuerung 1 die Information, ob die Kupplung 4 vollständig geschlossen bzw. das Kupplungspedal 3 ohne jegliche Betätigung ist.

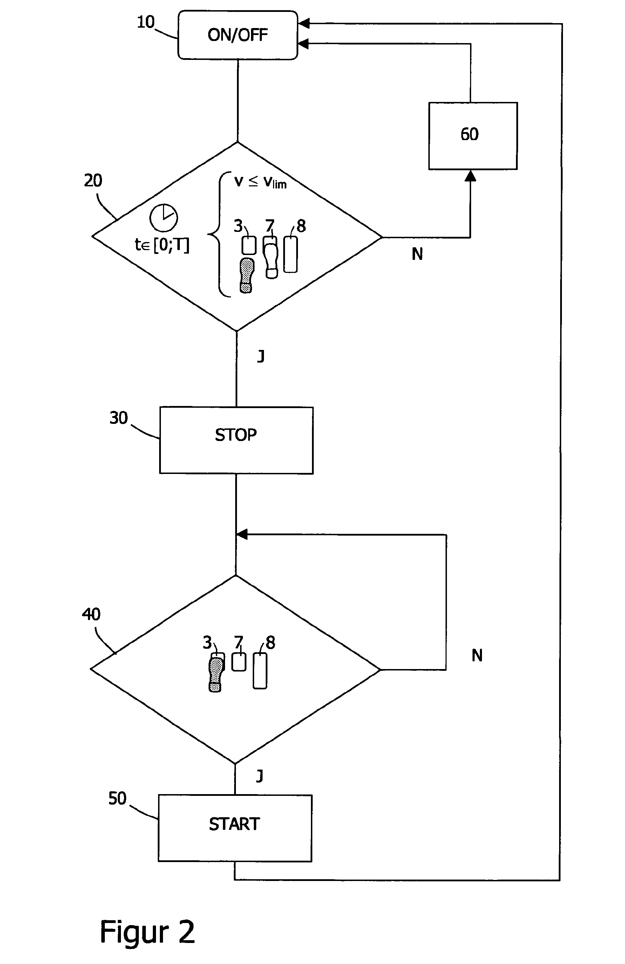

Nachfolgend wird unter Bezugnahme auf Figur 2 die Funktion des in Figur 1 dargestellten Antriebssystems bei der Verwirklichung einer automatischen Abstellung der Brennkraftmaschine 2 erläutert.

Wenn die Abstellautomatik grundsätzlich aktiviert ist (Zustand "ON" in Block 10), wird im Block 20 von Figur 2 überprüft, ob die Bedingungen für ein automatisches Abstellen der Brennkraftmaschine 2 vorliegen. Diese Bedingungen lauten:
1. Die Fahrzeuggeschwindigkeit ist kleiner als ein vorgegebener Schwellwert, d.h. v ≤ vₗᵢₘ, wobei der Schwellwert typischerweise ca. 3 km/h beträgt. Die Fahrzeuggeschwindigkeit kann alternativ auch über die Drehzahl der Räder oder eine andere geeignete Größe definiert werden.
2. Die Kupplung 4 ist geschlossen, d.h. das Kupplungspedal 3 wird nicht betätigt. Diese Bedingung ist in Figur 2 durch die Fußstellung des Fahrers in Bezug das Kupplungspedal 3, das Bremspedal 7 sowie das Gaspedal 8 symbolisiert.
3. Vorzugsweise wird weiterhin gefordert, daß das Bremspedal 7 betätigt sein muß bzw. daß eine Bremse des Kraftfahrzeuges aktiviert sein muß (Handbremse, Fußbremse, elektrische Bremse etc.).
4. Darüber hinaus können optional weitere Stop-Zusatzvoraussetzungen gefordert werden, beispielsweise daß die Brennkraftmaschine 2 sich in einem warmgelaufenen Zustand befinden muß, daß alle Türen des Kraftfahrzeuges geschlossen sein müssen, daß die von den elektrischen Verbrauchern des Fahrzeugs konsumierte Leistung gering ist und dergleichen.

Falls obige Bedingungen 1. bis 4. für eine vorgegebene Zeitdauer T, die typischerweise zwischen 10 und 200 Sekunden beträgt, durchgehend erfüllt sind, schaltet die Motorsteuerung 1 in Block 30 die Brennkraftmaschine 2 ab. Ist hingegen eine der Bedingungen während des Zeitraums T nicht mehr erfüllt, springt das Verfahren über einen Block 60 zum Eingang von Block 10 zurück, d. h. die relevanten Fahrzeugparameter werden von Neuem auf ein Vorliegen aller Bedingungen überwacht.

Im erwähnten Block 60 können bestimmte Zusatzfunktionen ausgeführt werden. Beispielsweise kann ein (kurzes) Betätigen und anschließendes Loslassen des Kupplungspedals 3 in Block 60 detektiert und als ein Signal zur Deaktivierung der Abstellautomatik interpretiert werden. In diesem Falle wird in Block 10 der Zustand "OFF" eingestellt und ein automatisches Abstellen der Brennkraftmaschine 2 dadurch blockiert. Die Abstellautomatik wird erst wieder aktiviert, wenn das Fahrzeug nach einem vom Fahrer veranlaßten Motorstillstand von Hand durch Drehen des Zündschlüssels erneut gestartet wird oder wenn der Fahrer die Abstellautomatik explizit wieder aktiviert. Eine solche explizite Aktivierung kann insbesondere in der gleichen Weise geschehen wie das Deaktivieren, d.h. durch ein Betätigen und anschließendes Loslassen des Kupplungspedals 3 in einem Zustand geringer Fahrzeuggeschwindigkeit v ≤ vₗᵢₘ.

Wenn bei aktivierter Abstellautomatik während der laufenden Überprüfung von Block 20 zu viele elektrische Verbraucher eingeschaltet sind, d. h. der Strombedarf im Kraftfahrzeug eine Energieerzeugung durch die Brennkraftmaschine 2 erfordert, kann dies in einer der oben genannten Stop-Zusatzvoraussetzung (Zif fer 4) berücksichtigt werden, um ein Abstellen der Brennkraftmaschine zu verhindem. Wenn ein Teil der elektrischen Leistungsanforderung dabei aus dem Einschalten einer Fahrgastraumheizung und/oder einer Klimaanlage resultiert, kann eine Überprüfung der Außentemperaturen erfolgen, um den voraussichtlichen Strombedarf des eingeschalteten Gerätes zu ermitteln und in Abhängigkeit hiervon das Abstellen der Brennkraftmaschine zuzulassen oder zu verbieten. Wenn beispielsweise die Außentemperaturen ≥ 15°C sind, kann die Brennkraftmaschine trotz eingeschalteter Heizung abgestellt werden, da der Strombedarf der Heizung voraussichtlich gering ist.

Falls beispielsweise durch das Einschalten elektrischer Geräte durch den Fahrer ein zusätzlicher elektrischer Leistungsbedarf auftritt, nachdem in Block 30 die Brennkraftmaschine 2 abgestellt wurde, wird die Leistungsaufnahme der elektrischen Einrichtungen vorzugsweise so geregelt, daß der Batteriezustand innerhalb akzeptabler Grenzen bleibt. Vorzugsweise wird darüber hinaus der Fahrer optisch und/oder akustisch aufgefordert, die Brennkraftmaschine 2 manuell neu zu starten. Ein automatisches Starten der Brennkraftmaschine 2 erfolgt jedoch nicht. Auf diese Weise bleibt einerseits die Transparenz des Automatikverfahrens für den Fahrer erhalten, andererseits werden kritische Zustände vermieden, die sich durch ein Einschalten der Brennkraftmaschine 2 bei geschlossener Kupplung 4 ergeben könnten. Während des Stillstands der Brennkraftmaschine könnte nämlich vom Fahrer ein Gang eingelegt worden sein, so daß das Neustarten zu einem plötzlichen Anfahren des Fahrzeugs führen würde.

Falls der Fahrer bei abgestellter Brennkraftmaschine 2 (Block 30) das Bremspedal 7 losläßt oder in sonstiger Weise die Bremsen löst, wird vorzugsweise eine optische und/oder akustische Warnung abgegeben. Das Lösen der Bremse könnte nämlich zu einem ungewollten Anrollen des Fahrzeugs führen. Weiterhin könnte wie oben beschrieben zwischenzeitlich ein Gang eingelegt worden sein, so daß sich die Fahrzeugbewegung auf die Brennkraftmaschine übertragen würde. Bei einem Automatikgetriebe sollte das Loslassen der Bremse ein Auslösefaktor für einen Neustart der Brennkraftmaschine sein. Im Übrigen wird jedoch trotz des Lösens der Bremse die Brennkraftmaschine 2 nicht automatisch neu gestartet.

Vorteilhafterweise enthält das Fahrzeug eine elektrische Parkbremse (nicht dargestellt). Diese wird von der Motorsteuerung 1 automatisch angezogen unmittelbar bevor die Brennkraftmaschine 2 abgestellt wird. Bei einem erneuten Anfahren des Fahrzeugs wird die Parkbremse wieder gelöst. Das Anziehen dieser Bremse erhöht den Komfort und die Sicherheit der Abstellautomatik erheblich. Durch die elektrische Parkbremse wird im Übrigen auch eine Berg-Haltefunktion erreicht.

Nach dem Abstellen der Brennkraftmaschine 2 im Block 30 wird in Block 40 fortlaufend überprüft, ob vorgegebene Bedingungen für ein erneutes Starten der Brennkraftmaschine 2 vorliegen oder nicht. Als auslösendes Kriterium für einen Neustart der Brennkraftmaschine 2 soll dabei vorliegend ein Betätigen des Kupplungspedals 3, d.h. ein Öffnen der Kupplung 4 durch den Fahrer dienen. Optional können darüber hinaus weitere Zusatzbedingungen wie beispielsweise ein Geschlossensein aller Fahrzeugtüren gefordert werden. Das erstmalige Betätigen der Kupplung bei einem Fahrzeugstillstand ist ein typisches Signal dafür, daß das Fahrzeug wieder anfahren soll, so daß es sinnvollerweise als Startsignal für die Brennkraftmaschine ausgewertet wird. Wenn der Fahrer die Brennkraftmaschine willkürlich wieder starten will, ohne daß damit eine unmittelbare Absicht zum Anfahren verbunden ist, kann er dies in gleicher Weise durch das Betätigen der Kupplung bewirken, da dies noch keine unmittelbare Auswirkung auf den Fahrzustand hat. Auf diese Weise bietet die Kupplung dem Fahrer eine einfache und i n-tuitiv plausible Möglichkeit zur Kontrolle der Abstellautomatik, ohne daß hierfür die Bereitstellung oder Betätigung zusätzlicher Schaltelemente erforderlich ist.

Die Verwendung der Kupplungsbetätigung als Startsignal hat darüber hinaus den Vorteil, daß ein während des Motorstillstands erfolgtes Einlegen eines Ganges unkritisch ist, da durch das Öffnen der Kupplung die Wirkverbindung zwischen Brennkraftmaschine und Rädern gerade wieder unterbrochen wird.

Nach dem Neustart der Brennkraftmaschine 2 in Block 50 geht das Verfahren zum Anfangspunkt zurück, d.h. es wird in Block 20 das erneute Vorliegen der Abschaltbedingungen überprüft. Gegebenenfalls kann vor einem erneuten Eintritt in die Überprüfung eine vorgegebene Zeitdauer abgewartet werden (Abstellautomatik OFF), um in besonderen Fahrsituationen nicht ein zu kurz hintereinander erfolgendes Abstellen der Brennkraftmaschine zu bewirken.

## Patentansprüche

1. Verfahren zur Steuerung des automatischen Abstellens einer Brennkraftmaschine (2) in einem Kraftfahrzeug mit einer vom Fahrer zu betätigenden Kupplung (4), wobei die Brennkraftmaschine (2) abgestellt wird, wenn für eine vorgegebene Zeitdauer (T) die Fahrzeuggeschwindigkeit (v) unterhalb eines vorgegebenen Schwellwertes (vₗᵢₘ) liegt, die Kupplung (4) geschlossen ist, die Abstellautomatik der Brennkraftmaschine (2) aktiviert ist und optional vorgegebene weitere Stop-Zusatzvoraussetzungen erfüllt sind,
**dadurch gekennzeichnet, daß**
die Abstellautomatik der Brennkraftmaschine (2) alternierend deaktiviert und aktiviert wird, wenn die Kupplung (4) innerhalb der genannten vorgegebenen Zeitdauer (T) einmal geöffnet und erneut geschlossen wird.

2. Verfahren nach Anspruch 1,
**dadurch gekennzeichnet, daß**
die Stop-Zusatzvoraussetzungen beinhalten, daß eine Bremse (7) des Fahrzeugs betätigt wird, daß die Brennkraftmaschine (2) warmgelaufen ist, daß die Fahrzeugtüren geschlossen sind, und/oder daß ausreichende Energie für die Versorgung elektrischer Verbraucher vorhanden ist.

3. Verfahren nach Anspruch 1 oder 2,
**dadurch gekennzeichnet, daß**
das Fahrzeug eine elektrische Parkbremse enthält und diese vor dem Abstellen der Brennkraftmaschine (2) angezogen wird.

4. Verfahren nach mindestens einem der Ansprüche 1 bis 3,
**dadurch gekennzeichnet, daß**
nach Abstellen der Brennkraftmaschine (2) ein Warnsignal abgegeben wird, wenn die Bremse (7) des Kraftfahrzeugs losgelassen wird.

5. Verfahren nach mindestens einem der Ansprüche 1 bis 4,
**dadurch gekennzeichnet, daß**
nach Abstellen der Brennkraftmaschine (2) eine Aufforderung zum Neustart der Brennkraftmaschine (2) abgegeben wird, wenn die vorrätige elektrische Energie nicht mehr zum ordnungsgemäßen Betrieb der elektrischen Verbraucher des Kraftfahrzeugs ausreicht.

6. Verfahren nach mindestens einem der Ansprüche 1 bis 5,
**dadurch gekennzeichnet, daß**
die abgestellte Brennkraftmaschine (2) wieder gestartet wird, wenn die Kupplung (4) geöffnet wird und optional vorgegebene Start-Zusatzvoraussetzungen erfüllt sind.

7. Antriebssystem für ein Kraftfahrzeug, enthaltend eine Brennkraftmaschine (2), eine Kupplung (4) und ein Motorsteuerungssystem (1),
**dadurch gekennzeichnet, daß**
das Motorsteuerungssystem (1) dahingehend ausgebildet ist, ein Verfahren nach mindestens einem der Ansprüche 1 bis 6 auszuführen.

8. Antriebssystem nach Anspruch 7,
**dadurch gekennzeichnet, daß**
dieses einen mit dem Motorsteuerungssystem (1) gekoppelten Sensor zur Erfassung eines vollständigen Schließens der Kupplung (4) enthält.

9. Antriebssystem nach Anspruch 7 oder 8,
**dadurch gekennzeichnet, daß**
dieses eine elektrische Parkbremse enthält.

## Claims

1. Method for controlling the automatic shutting down of an internal combustion engine (2) in a motor vehicle having a clutch (4) which has to be actuated by the driver, the internal combustion engine (2) being shut down if the velocity (v) of the vehicle is below a predefined threshold value (vₗᵢₘ) for a predefined time period (T), the clutch (4) is closed, the automatic shut-down system of the internal combustion engine (2) is actuated and optionally predefined, further additional stop conditions are met, **characterized in that** the automatic shut-down system of the internal combustion engine (2) is alternately deactivated and activated if the clutch (4) has been opened once and closed again within the aforesaid predefined time period (T).

2. Method according to Claim 1, **characterized in that** the additional stop conditions include the fact that a brake (7) of the vehicle is activated, that the internal combustion engine (2) has warmed up, that the doors of the vehicle are closed and/or that sufficient energy is available to supply electrical loads.

3. Method according to Claim 1 or 2, **characterized in that** the vehicle contains an electric parking brake and said brake is put on before the internal combustion engine (2) is shut down.

4. Method according to at least one of Claims 1 to 3, **characterized in that** after the internal combustion engine (2) has been shut down a warning signal is issued if the brake (7) of the motor vehicle is released.

5. Method according to at least one of Claims 1 to 4, **characterized in that** after the internal combustion engine (2) has been shut down, a request to restart the internal combustion engine (2) is issued if the electrical energy stored is insufficient for satisfactory operation of the electrical loads of the motor vehicle.

6. Method according to at least one of Claims 1 to 5, **characterized in that** the shut-down internal combustion engine (2) is started again if the clutch (4) is opened and optionally predefined additional start conditions are met.

7. Drive system for a motor vehicle, containing an internal combustion engine (2), a clutch (4) and an engine control system (1), **characterized in that** the engine control system (1) is designed to carry out a method according to at least one of Claims 1 to 6.

8. Drive system according to Claim 7, **characterized in that** said system contains a sensor which is coupled to the engine control system (1) and has the purpose of sensing complete closure of the clutch (4).

9. Drive system according to Claim 7 or 8, **characterized in that** said system contains an electric parking brake.

## Revendications

1. Procédé de commande de l'arrêt automatique d'un moteur à combustion interne (2) dans un véhicule automobile, comprenant un embrayage (4) pouvant être actionné par le conducteur, le moteur à combustion interne (2) étant arrêté lorsque la vitesse du véhicule (v) est en dessous d'une valeur seuil prédéterminée (vₗᵢₘ) pendant une durée prédéfinie (T), que l'embrayage (4) est fermé, que le mécanisme d'arrêt automatique du moteur à combustion interne (2) est activé et que d'autres conditions préalables supplémentaires d'arrêt éventuellement prédéfinies sont satisfaites,
**caractérisé en ce que**
le mécanisme d'arrêt automatique du moteur à combustion interne (2) est désactivé et réactivé en alternance lorsque l'embrayage (4) est ouvert et à nouveau fermé en l'espace de ladite durée prédéfinie (T).

2. Procédé selon la revendication 1,
**caractérisé en ce que**
les conditions préalables supplémentaires d'arrêt incluent qu'un frein (7) du véhicule soit actionné, que le moteur à combustion interne (2) fonctionne à chaud, que les portes du véhicule soient fermées, et/ou que suffisamment d'énergie soit présente pour l'alimentation de consommateurs électriques.

3. Procédé selon la revendication 1 ou 2,
**caractérisé en ce que**
le véhicule contient un frein de stationnement électrique et celui-ci est serré avant l'arrêt du moteur à combustion interne (2).

4. Procédé selon au moins l'une quelconque des revendications 1 à 3,
**caractérisé en ce**
**qu'**après l'arrêt du moteur à combustion interne (2), un signal d'avertissement est émis lorsque le frein (7) du véhicule automobile est relâché.

5. Procédé selon au moins l'une quelconque des revendications 1 à 4,
**caractérisé en ce**
**qu'**après l'arrêt du moteur à combustion interne (2), une demande de nouveau démarrage du moteur à combustion interne (2) est émise lorsque l'énergie électrique en réserve ne suffit plus pour le fonctionnement correct des consommateurs électriques du véhicule automobile.

6. Procédé selon au moins l'une quelconque des revendications 1 à 5, **caractérisé en ce que**
le moteur à combustion interne arrêté (2) est redémarré lorsque l'embrayage (4) est ouvert et que des conditions préalables supplémentaires de démarrage éventuellement prédéfinies sont satisfaites.

7. Système d'entraînement pour un véhicule automobile, contenant un moteur à combustion interne (2), un embrayage (4) et un système de commande de moteur (1),
**caractérisé en ce que**
le système de commande de moteur (1) est réalisé de manière à effectuer un procédé selon l'une quelconque des revendications 1 à 6.

8. Système d'entraînement selon la revendication 7,
**caractérisé en ce**
**qu'**il comprend un capteur accouplé au système de commande de moteur (1) pour détecter une fermeture complète de l'embrayage (4).

9. Système d'entraînement selon la revendication 7 ou 8, **caractérisé en ce qu'**il comprend un frein de stationnement électrique.
